# EUROPÄISCHE PATENTSCHRIFT

(11) **EP 2 756 572 B1**
(45) Veröffentlichungstag und Bekanntmachung des Hinweises auf die Patenterteilung: **28.12.2016**
(21) Anmeldenummer: 11757862.5
(22) Anmeldetag: 16.09.2011
(51) Int. Cl.: H02H 6/00, G01K 13/00, H02H 5/04, H02H 7/085

(54) **VORRICHTUNG UND VERFAHREN ZUM SCHUTZ EINES VERBRAUCHERS**
DEVICE AND METHOD FOR PROTECTING A LOAD
DISPOSITIF ET PROCÉDÉ DE PROTECTION D'UN CONSOMMATEUR

(43) Veröffentlichungstag der Anmeldung: 23.07.2014
(73) Patentinhaber: Siemens Aktiengesellschaft, 80333 München (DE)
(72) Erfinder: KRÄTZSCHMAR, Andreas, 92260 Ammerthal (DE); NEUMANN, Siegfried, 92245 Kümmersbruck (DE); WEISS, Uwe, 92224 Amberg (DE)
(86) Internationale Anmeldenummer: PCT/EP2011/066098
(87) Internationale Veröffentlichungsnummer: WO 2013/037418

(56) Entgegenhaltungen:
- US-A- 5 684 342
- US-A1- 2005 204 761

## Beschreibung

Die Erfindung betrifft eine Vorrichtung und ein Verfahren zum Schutz eines Verbrauchers vor einer Überlast, insbesondere einer thermischen Überlast.

Als Verbraucher wird hierbei insbesondere ein Elektromotor (z.B. Asynchronmotor), ein Kabel und/oder eine Leitung gesehen. Eine thermische Überlast am Verbraucher entsteht durch einen überhöhten Stromfluss, beispielsweise durch eine mechanische Überlast an einem Elektromotor oder durch einen Ausfall eines einzelnen oder zweier Strompfade (Phasen) des Elektromotors hervorgerufen. Hierbei kommt es zu einer unerwünschten Temperaturentwicklung am Verbraucher, was letztendlich zu einer Beschädigung des Verbrauchers führen kann.

Zur Ermittlung einer anstehenden thermischen Überlast eines elektrischen Verbrauchers werden meist Vorrichtungen in den Strompfad, über welchen der Verbraucher mit elektrischer Energie versorgt wird, integriert, so dass mittels dieser Vorrichtungen eine anstehende thermische Überlast detektiert werden kann. Hierbei kann eine einphasige aber auch eine mehrphasige Überwachung erfolgen, d.h. es kann ein einzelner Strompfad (eine Phase) aber auch mehrere Strompfade (mehrere Phasen) des Verbrauchers überwacht werden.

Die entsprechenden Vorrichtungen weisen je zu überwachenden Strompfad eine Strombahn auf, über welche die über den Strompfad erfolgende Energieversorgung geführt wird. Die elektrische Energie des Verbrauchers wird somit mittels der Strombahn durch die Vorrichtung geleitet. Mittels einer Überwachungseinrichtung der Vorrichtung wird der Stromfluss der Strombahn überwacht, so dass eine anstehende Überlast des Verbrauchers detektiert werden kann. Derartige Vorrichtungen sind beispielsweise Überlastrelais oder Leistungsschalter. Ein Leistungsschalter weist für einen nachgeschalteten Verbraucher neben einem Schutz vor einer thermischen Überlast durch einen A-Auslöser ferner einen Kurzschlussschutz durch einen N-Auslöser auf.

In der vorliegenden Anmeldung soll insbesondere ein Überlastschutz für einen Verbraucher (z.B. Motoren, Leitungen, Transformatoren und Generatoren) bereitgestellt werden.

An eine Vorrichtung zur Ermittlung einer thermischen Überlast eines Verbrauchers werden unterschiedliche Anforderungen gestellt:
- Die Vorrichtung soll möglichst sowohl AC- als auch DC-Ströme überwachen können, so dass sowohl AC- als auch DC-Verbraucher auf Überlast überwacht werden können.
- Die Vorrichtung soll einen möglichst großen Einstellbereich aufweisen. Der Einstellbereich ist der Bereich, in welchen eine Überwachung des Betriebsstromes des elektrischen Verbrauchers erfolgen kann. Er wird durch die Betriebsstromobergrenze I_{O} und Betriebsstromuntergrenze I_{U} begrenzt (I_{O} zu I_{U}). Mittels eines Einstellmittels (z.B. Einstellschraube) an der Vorrichtung kann der thermische Überlastauslöser auf den jeweiligen Nennstrom des Verbrauchers eingestellt werden, so dass eine gezielte Überwachung des nachgeschalteten zu überwachenden Verbrauchers erfolgen kann.
- Die Vorrichtung soll eine möglichst geringe Verlustleistung erzeugen.
- Die Vorrichtung soll eine möglichst einfache galvanische Trennung zwischen der zu überwachenden Strombahn und der Überwachungseinrichtung, welche die Überlast detektiert, aufweisen.
- Die Vorrichtung soll ein thermisches Gedächtnis besitzen. D.h. wird eine anstehende thermische Überlast eines Verbrauchers ermittelt, so sollte die Stromzufuhr zum Verbraucher solange unterbrochen werden, bis ein Abkühlen des Verbrauchers sichergestellt ist. Es sollte somit kein sofortiges Zuschalten eines Verbrauchers nach einer ermittelten thermischen Überlast ermöglicht werden.

Bei einer anstehenden thermischen Überlast eines Verbrauchers kommt es in den einzelnen Strompfaden (Phasen) des Verbrauchers zu einem erhöhten Stromanstieg. Eine dem Verbraucher vorgeschaltete Vorrichtung zur Überwachung einer thermischen Überlast des Verbrauchers kann folglich durch eine Überwachung seiner Strombahn diesen erhöhten Stromanstieg detektieren und auswerten. Hierfür können unterschiedliche Messprinzipien angewandt werden. Die Ermittlung einer anstehenden Überlast kann somit mittels unterschiedlicher Überwachungseinrichtungen der Vorrichtung erfolgen.

Überwachungseinrichtungen zur Detektion einer Überlast eines Verbrauchers umfassen üblicherweise je zu überwachende Phase des Verbrauchers an der entsprechenden Strombahn einen Bimetallauslöser, einen Stromwandler oder einen Shunt.

Bei einer Überwachung mittels eines Bimetallauslösers wird die zu überwachende Strombahn mit einem Bimetallauslöser derart gekoppelt, dass es durch den Stromanstieg zu einer Erwärmung des Bimetallauslösers und letztendlich zu einer räumlichen Auslenkung eines Teils des Bimetallauslösers kommt. Diese Auslenkung wird detektiert und weiter ausgewertet. Mittels eines Bimetallauslösers können sowohl Gleichströme als auch Wechselströme erfasst werden. Der typische Einstellbereich des Bimetallauslösers liegt bei 1 zu 1,6. Nachteilig am Bimetallauslöser ist, dass er eine hohe Verlustleistung generiert. Das thermische Gedächtnis und die galvanische Trennung zwischen den einzelnen Strompfaden (Phasen) sind bei dem Bimetallauslöser hingegen mit geringem Aufwand zu realisieren.

Bei einer Überwachung mittels eines Stromwandlers ermittelt der jeweilige Stromwandler den Stromfluss seiner Strombahn, so dass eine Auswerteeinheit eine weiterführende Analyse des Stromflusses durchführen kann, und letztendlich eine anstehende Überlast detektieren kann. Nachteilig dieser Messmethode ist, dass keine DC-Ströme erfasst werden können. Der Einstellbereich liegt bei 1 zu 10 und die Verlustleistung ist niedrig. Ein thermisches Gedächtnis kann jedoch durch die Stromwandler selbst nicht nachgebildet werden.

Bei einer Überwachung mittels eines Shunts ist der Shunt in der Strombahn integriert, so dass über diesen ein den Stromfluss charakterisierender Spannungsabgriff erfolgen kann. Durch eine nachgeschaltete Analyse der am Shunt anliegenden Spannung kann eine anstehende thermische Überlast ermittelt werden. Mittels eines Shunt-Messverfahren ist eine Erfassung von AC/DC-Strömen möglich. Der Einstellbereich liegt üblicherweise bei 1 zu 4. Nachteilig an dem Messverfahren mittels eines Shunts ist, dass durch den Spannungsabgriff am Shunt kein thermisches Gedächtnis nachgebildet wird und die galvanische Trennung der einzelnen Phasen nur mit großem Aufwand möglich ist.

Aus der US 2005/0204761 A1 ist eine Temperaturüberwachungseinheit bekannt, mittels welcher das Überhitzen von Halbleiterschaltelementen überwacht wird. Mittels der Halbleiterschaltelemente wird innerhalb eines Fahrzeuges der von einer Batterie bereitgestellte Gleichstrom in Wechselstrom gewandelt, so dass ein Elektromotor des Fahrzeuges mit Wechselstrom betrieben werden kann. Die Halbleiterschaltelemente werden mittels einer Flüssigkeitskühlung gekühlt. Die Temperatur der Halbleiterschaltelemente wird anhand der ermittelten Temperatur eines Temperaturfühlers überwacht. Der Temperaturfühler erfasst hierbei entweder die Temperatur des flüssigen Kühlmediums der Flüssigkeitskühlung oder die Temperatur im Bereich der Halbleiterschaltelemente.

Eine Aufgabe der vorliegenden Erfindung ist es, eine Vorrichtung sowie ein Verfahren bereitzustellen mit welcher eine Ermittlung einer anstehenden Überlast eines Verbrauchers erfolgen kann. Insbesondere sollen mittels der Vorrichtung sowohl Gleichströme als auch Wechselströme überwacht werden können. Ferner soll vorzugsweise eine einfache galvanische Trennung der Überwachungseinrichtung von der zu überwachenden Strombahn ermöglicht werden.

Diese Aufgabe wird gelöst durch eine Vorrichtung gemäß Anspruch 1, und einem Verfahren gemäß Anspruch 15. Vorteilhafte Weiterbildungen der Erfindung sind in den abhängigen Ansprüchen 2 bis 14 angegeben.

Die Strombahn ist insbesondere ein Teil einer Zuleitung einer Energieversorgung des Verbrauchers. Die Zuleitung wird ebenso Hauptstrombahn oder Phase genannt. Im aktiven Betrieb des Verbrauchers (z.B. Elektromotor) fließt durch die Strombahn und somit durch den ersten Messwandler ein zeitabhängiger Motorstrom, welcher im ersten Messwandler in Abhängigkeit der Stromhöhe und der Stromflusszeit zu einer definierten Erwärmung des ersten Messwandlers (strombedingten Erwärmung) führt. Bei einer anstehenden Überlast des Verbrauchers ist das thermische Verhalten des ersten Messwandlers gegenüber dem thermischen Verhalten im Standardbetrieb des Verbrauchers charakteristisch. Insbesondere liegt bei einer anstehenden Überlast gegenüber dem Standardbetrieb am ersten Messwandler eine erhöhte Temperatur vor. Dies führt zu einem charakteristischen Erwärmungsverhalten des ersten Messwandlers, welche seitens der Auswerteeinheit ermittelt und ausgewertet werden kann. Durch die Auswerteeinheit erfolgt insbesondere eine Analyse der ermittelten Temperatur des ersten Messwandlers über die Zeit, so dass hieraus eine anstehende Überlast am Verbraucher erkannt werden kann. Hierbei wird vorzugsweise das Erwärmungsverhalten des ersten Messwandlers während eines definierten Zeitintervalls ausgewertet.

Unter dem Erwärmungsverhalten des Messwandlers wird insbesondere die zeitliche Veränderung der Temperatur einer Temperaturmessstelle an dem ersten Messwandler oder die zeitliche Veränderung einer Temperaturdifferenz zwischen zwei bzw. mehreren Temperaturmessstellen (z.B. Temperaturdifferenz zwischen der Temperatur des ersten Messwandler und einer Referenztemperatur) verstanden. Durch diese zeitliche Änderung der Temperatur bzw. der Temperaturdifferenz zweier Temperaturmessstellen, also dem Erwärmungsverhalten, kann auf den zeitlichen Stromverlauf geschlossen werden. Anhand dieses zeitlichen Stromverlaufs kann wiederum auf einen Überlastzustand am Verbraucher geschlossen werden.

Vorzugsweise erfolgen die zeitliche Abtastung der Temperaturmessstelle/-n, die eventuelle Temperaturdifferenzbestimmung, die Bestimmung der zeitlichen Temperaturänderung und der Rückschluss auf den zeitlichen Stromverlauf bzw. Überlastzustand in der Auswerteeinheit.

Durch die erste Temperaturmesseinheit kann die Temperatur des ersten Messwandlers erfasst und der Auswerteeinheit bereitgestellt werden. Die Auswerteeinheit kann vorzugsweise durch eine Analyse der erfassten Temperatur über die Zeit und/oder mittels einer zusätzlichen Referenztemperatur, welche durch die erste Temperaturmesseinheit innerhalb oder außerhalb der Vorrichtung erfasst wird, das Erwärmungsverhalten des ersten Messwandlers ermitteln. Anhand einer Analyse des ermittelten Erwärmungsverhaltens des ersten Messwandlers durch die Auswerteeinheit kann folglich eine anstehende Überlast des Verbrauchers ermittelt werden.

Der mit der Erfindung erzielte Vorteil besteht darin, dass mittels einer derartigen Vorrichtung bzw. mittels eines derartigen Verfahrens sowohl AC- als auch DC-Ströme erfasst werden können. Es kann somit eine anstehende Überlast bei AC- und DC-Verbrauchers ermittelt werden. Ferner kann ein gegenüber einem Bimetall-Messverfahren verbesserter Einstellbereich erzielt werden. Ferner kann ein thermisches Gedächtnis realisiert werden, da bei einer anstehenden Überlast der erste Messwandler stark erhitzt wird, so dass anhand der Temperatur und somit Abkühlung des ersten Messwandlers ein Abkühlverhalten des Verbrauchers nachvollzogen werden kann.

In einer vorteilhaften Ausführungsform der Erfindung kann die Auswerteeinheit anhand eines Vergleichs des ermittelten Erwärmungsverhaltens des ersten Messwandlers mit einem in der Auswerteeinheit hinterlegten Referenzwert eine anstehende Überlast am Verbraucher ermitteln.

Die erste Temperaturmesseinheit ist dazu ausgebildet der Auswerteeinheit Temperaturen zu übermitteln, so dass die Auswerteeinheit ein Erwärmungsverhalten des ersten Messwandlers ermitteln kann. Da in der Auswerteeinheit ein Referenzwert hinterlegt ist, kann durch einen Vergleich des ermittelten vorliegenden Erwärmungsverhaltens mit dem Referenzwert ein Rückschluss auf den vorliegenden Betriebszustand des Verbrauchers gewonnen werden (Auswertung). Steht eine Überlast an, so liegt im Vergleich zum Nennbetrieb ein erhöhter Stromfluss und somit eine erhöhte Temperatur vor. Die erhöhte Temperatur führt zu einem charakteristischen Erwärmungsverhalten des ersten Messwandlers, welche durch einen Abgleich mit dem hinterlegten Referenzwert erkannt werden kann.

Durch den Referenzwert wird insbesondere das Erwärmungsverhalten des ersten Messwandlers in Abhängigkeit des Stromflusses durch den ersten Messwandler über die Zeit charakterisiert, so dass eine Überlast am Verbraucher erkannt werden kann. Durch einen Vergleich des ermittelten Erwärmungsverhaltens des ersten Messwandlers mit dem Referenzwert kann somit zwischen einem durch den Nennbetrieb bedingten Erwärmungsverhalten und einem durch eine anstehende Überlast bedingten Erwärmungsverhalten des ersten Messwandlers unterschieden werden.

In einer weiteren vorteilhaften Ausführungsform der Erfindung kann die Auswerteeinheit bei einer ermittelten anstehenden Überlast am Verbraucher ein Warnsignal, insbesondere ein elektrisches Warnsignal, ausgeben. Durch das Warnsignal ist insbesondere eine Schaltstellung eines Schaltelements der Vorrichtung steuerbar. Durch das Schaltelement wird entweder ein Hilfsstromkreis oder ein Hauptstromkreis (Zuleitung der Energieversorgung des elektrischen Verbrauchers) direkt gesteuert.

Steuert das Schaltelement den Hilfsstromkreis, so wird das Schalelement geöffnet oder geschlossen, so dass ein den Hauptstromkreis schaltendes Schaltgerät (z.B. Schütz) angesteuert wird. Dieses den Hauptstromkreis schaltende Schaltgerät öffnet daraufhin den Hauptstromkreis, so dass der Stromfluss zum Verbraucher unterbrochen wird und somit die Überlast am Verbraucher vermieden wird.

Steuert das Schaltelement den Hauptstromkreis, so wird das Schalelement geöffnet, so dass der Stromfluss zum Verbraucher unterbrochen wird und somit die Überlast am Verbraucher vermieden wird.

Liegt ein mehrphasiger Verbraucher vor, so werden vorzugsweise durch eine Ermittlung einer anstehenden Überlast an lediglich einer Strombahn der Vorrichtung (und somit an lediglich einer Phase des Verbrauchers) alle Phasen des Verbrauchers durch die Vorrichtung geöffnet, so dass der Stromfluss zum Verbraucher unterbunden wird.

In einer weiteren vorteilhaften Ausführungsform der Erfindung umfasst die erste Temperaturmesseinheit einen ersten und zweiten Temperaturfühler, wobei der erste Temperaturfühler

In einer weiteren vorteilhaften Ausführungsform der Erfindung umfasst die erste Temperaturmesseinheit einen ersten und zweiten Temperaturfühler, wobei der erste Temperaturfühler die Temperatur des ersten Messwandlers und der zweite Temperaturfühler eine Referenztemperatur erfassen kann.

Die Auswerteeinheit ist vorzugsweise derart ausgebildet, dass sie nun das Erwärmungsverhalten des ersten Messwandlers mittels erfasster Temperaturen des ersten Messwandlers und Referenztemperaturen ermitteln und letztendlich auswerten kann.

Durch einen Abgleich einer erfassten Temperatur des ersten Messwandlers mit einer zeitgleich erfassten Referenztemperatur in der Auswerteinheit, können externe Temperatureinflüsse als wesentliche Fehlerursache weitestgehend ausgeschlossen werden. Durch die Auswerteeinheit kann somit ein ausschließlich strombedingtes, eine Überlast am Verbraucher charakterisierendes Erwärmungsverhalten des ersten Messwandlers ermittelt werden.

Bei einer anstehenden Überlast des Verbrauchers liegt gegenüber dem Nennbetrieb des Verbrauchers (z.B. Elektromotor) am ersten Messwandler ein erhöhter Stromfluss und somit eine erhöhte Temperatur vor. Der erste Temperaturfühler detektiert somit eine strombedingte erhöhte Temperatur. Durch den zweiten Temperaturfühler wird als Referenztemperatur z.B. eine Temperatur in der Vorrichtung ermittelt, so dass durch einen Vergleich der Temperatur des ersten Temperaturfühlers mit der Referenztemperatur des zweiten Temperaturfühlers das strombedingte Erwärmungsverhalten des ersten Messwandlers ermittelt werden kann. Auf diese Weise kann ausgeschlossen werden, dass es sich bei dem ermittelten Erwärmungsverhalten des ersten Messwandlers nicht um einen Erwärmung des ersten Messwandlers durch einen Anstieg der Umgebungstemperatur bei der Vorrichtung handelt, sondern um eine strombedingte Erwärmung am ersten Messwandler. Bei der Analyse des Erwärmungsverhaltens des ersten Messwandlers erfolgt insbesondere eine Analyse der Temperatur des ersten Messwandlers über die Zeit, d.h. die Erwärmung des ersten Messwandlers über die Zeit wird analysiert.

Durch einen Vergleich der Temperaturen des ersten und zweiten Temperaturfühlers kann somit erkannt werden, ob durch den vorliegenden Motorstrom, welcher durch den Messwandler fließt, eine strombedingte Erwärmung des ersten Messwandlers stattgefunden hat, welche eine anstehende Überlast des Verbrauchers charakterisiert, oder nicht.

Die Referenztemperatur wird vorzugsweise durch eine Messung einer Temperatur durch den zweiten Temperaturfühler in der Vorrichtung erzielt.

Die Erfassung der Temperatur mit dem ersten und zweiten Temperaturfühler erfolgt vorzugsweise zeitgleich.

Durch den ersten und zweiten Temperaturfühler kann vorzugsweise eine Temperaturdifferenz von ca. 4 Kelvin durch die Auswerteeinheit ermittelt werden.

Es kann somit ein zeitliches Erwärmungsverhalten des ersten Messwandlers, welches durch den Stromfluss durch den ersten Messwandler hervorgerufen wird und eine Überlast am Verbraucher charakterisiert, ermittelt werden (strombedingte Erwärmung).

Der erste Messwandler weist vorzugsweise bei Nennbetrieb des Verbrauchers eine Temperatur von ca. 60-100°C auf. Bei einer maximalen Überlast am Verbraucher kann hingegen am ersten Messwandler eine Temperatur von 600-700°C vorliegen.

In einer weiteren vorteilhaften Ausführungsform der Erfindung ist der erste Temperaturfühler maximal 2 mm von dem ersten Messwandler beabstandet.

In einer weiteren vorteilhaften Ausführungsform der Erfindung ist die Überwachungseinrichtung derart ausgebildet, dass zur zeitlichen Ermittlung des Erwärmungsverhaltens des ersten Messwandlers mindestens zweimal die Temperatur des ersten Messwandlers erfasst wird.

Sofern durch die Vorrichtung zusätzlich die Referenztemperatur erfasst wird (der zweite Temperaturfühler liegt vor), so wird zur Ermittlung des Erwärmungsverhaltens des ersten Messwandlers vorzugsweise mindestens zweimal zeitgleich die Temperatur des ersten Messwandlers und die Referenztemperatur erfasst.

In einer weiteren vorteilhaften Ausführungsform der Erfindung ist die Überwachungseinrichtung derart ausgebildet, dass zur Ermittlung des Erwärmungsverhaltens des ersten Messwandlers die Temperatur des ersten Messwandlers wiederholt in einem fest definierten Zeitintervall erfasst und anschließend ausgewertet wird.

Sofern durch die Vorrichtung zusätzlich die Referenztemperatur erfasst wird (der zweite Temperaturfühler liegt vor), so wird zur Ermittlung des Erwärmungsverhaltens des ersten Messwandlers vorzugsweise zeitgleich die Temperatur des ersten Messwandlers und die Referenztemperatur erfasst.

In einer weiteren vorteilhaften Ausführungsform der Erfindung ist zwischen dem ersten Temperaturfühler und dem ersten Messwandler eine Isolationsschicht angeordnet. Hierdurch kann eine sichere galvanische Trennung der ersten Temperaturüberwachungseinrichtung zum ersten Messwandler sichergestellt werden. Ferner kann durch die Isolationsschicht eine gute thermische Kopplung des Temperaturfühlers mit dem entsprechenden Messwandler erfolgen. Die Isolationsschicht wird vorzugsweise als Träger für die Temperaturfühler verwendet. Die Isolationsschicht ist beispielsweise Leiterplattenmaterial FR4, Lack, Glas, Glimmer oder eine Keramik.

In einer weiteren vorteilhaften Ausführungsform der Erfindung umfasst die Vorrichtung ferner eine zweite Strombahn, welche zwei Leitungen umfasst, wobei die Überwachungseinrichtung ferner eine zweite Temperaturmesseinheit und einen zweiten Messwandler, welcher eine elektrisch leitende Verbindung zwischen den zwei Leitungen der zweiten Strombahn herstellt, umfasst, wobei die zweite Temperaturmesseinheit von dem zweiten Messwandler galvanisch getrennt ist und die Temperatur des zweiten Messwandlers erfassen kann, so dass die Auswerteeinheit mittels der erfassten Temperatur des zweiten Messwandlers eine anstehende Überlast am Verbraucher ermitteln kann.

Die zweite Temperaturmesseinheit umfasst hierfür einen dritten Temperaturfühler, welcher die Temperatur am zweiten Messwandler ermitteln kann, so dass die Auswerteeinheit ein strombedingtes Erwärmungsverhalten des zweiten Messwandlers ermitteln kann. Die Ermittlung des Erwärmungsverhaltens des zweiten Messwandlers durch die Auswerteeinheit erfolgt durch eine Analyse der erfassten Temperatur des zweiten Messwandlers über die Zeit. Hierbei wird vorzugsweise zusätzlich, insbesondere zeitgleich, eine Referenztemperatur ermittelt (z.B. die erfasste Referenztemperatur durch den zweiten Temperaturfühler der ersten Temperaturmesseinheit) und mit analysiert, so dass eine "nicht strombedingte" Erwärmung (z.B. durch die Umgebungstemperatur) unberücksichtigt bleibt. Durch eine Auswertung des ermittelten Erwärmungsverhaltens kann eine anstehende Überlast am Verbraucher erkannt werden.

In einer weiteren vorteilhaften Ausführungsform der Erfindung umfasst die Vorrichtung ferner eine dritte Strombahn, welche zwei Leitungen umfasst, wobei die Überwachungseinrichtung ferner eine dritte Temperaturmesseinheit und einen dritten Messwandler, welcher eine elektrisch leitende Verbindung zwischen den beiden Leitungen der dritten Strombahn herstellt, umfasst, wobei die dritte Temperaturmesseinheit von dem dritten Messwandler galvanisch getrennt ist und die Temperatur des dritten Messwandlers erfassen kann, so dass die Auswerteeinheit mittels der erfassten Temperatur des dritten Messwandlers eine anstehende Überlast am Verbraucher ermitteln kann.

Die dritte Temperaturmesseinheit umfasst hierfür einen vierten Temperaturfühler, welcher die Temperatur am dritten Messwandler ermitteln kann, so dass die Auswerteeinheit ein strombedingtes Erwärmungsverhalten des dritten Messwandlers ermitteln kann. Die Ermittlung des Erwärmungsverhaltens des dritten Messwandlers durch die Auswerteeinheit erfolgt durch eine Analyse der Temperatur des dritten Messwandlers über die Zeit. Hierbei wird vorzugsweise zusätzlich, insbesondere zeitgleich, eine Referenztemperatur ermittelt (z.B. die erfasste Referenztemperatur durch den zweiten Temperaturfühler der ersten Temperaturmesseinheit) und mit analysiert, so dass eine "nicht strombedingte" Erwärmung des dritten Messwandlers (z.B. durch die Umgebungstemperatur) unberücksichtigt bleibt. Durch eine Auswertung des ermittelten Erwärmungsverhaltens kann eine anstehende Überlast am Verbraucher erkannt werden.

Die zweite und/oder dritte Temperaturmesseinheit kann entsprechend der ersten Temperaturmesseinheit ausgebildet sein, d.h.:
- es können jeweils zwei Temperaturfühler je Temperaturmesseinheit vorhanden sein,
- die Temperaturfühler können maximal 2 mm von der entsprechenden Messeinheit beabstandet sein, und/oder
- es kann eine Isolationsschicht zwischen den Temperaturfühlern und dem entsprechenden Messwandler angeordnet sein,
- etc.

Es ist ebenso denkbar, dass die erste und/oder zweite und/oder dritte Temperaturmesseinheit weitere Temperaturfühler umfasst, so dass eine genaue Ermittlung des Erwärmungsverhaltens am zugehörigen Messwandler erfolgen kann. Vorzugsweise wird die Temperatur des jeweiligen Messwandlers mit jeweils zwei Temperaturfühlern direkt gemessen, so dass das Erwärmungsverhalten des Messwandlers durch die Auswerteeinheit ermittelt werden kann.

In einer weiteren vorteilhaften Ausführungsform der Erfindung ist der jeweilige Temperaturfühler derart ausgebildet, dass er in Abhängigkeit der vorliegenden Temperatur einen charakteristischen Zustand einnimmt. Der Temperaturfühler ist insbesondere ein Thermoelement (z.B. Thermodraht), ein temperaturabhängiger Halbleiter (z.B. Diode, Kaltleiter) oder ein Widerstandsthermometer (z.B. PT100, PT1000). Wird beispielsweise eine Diode als Temperaturfühler verwendet, so kann anhand einer Messung der Spannung an der Diode ein Rückschluss auf die vorliegende Temperatur gewonnen werden. Eine Temperaturänderung des ersten Messwandlers würde folglich zu einer Temperaturänderung an der Diode führen, welche zu einer Spannungsänderung führt.

In einer weiteren vorteilhaften Ausführungsform der Erfindung ist der erste Messwandler und sofern vorhanden zweite und/oder dritte Messwandler jeweils ein elektrischer Widerstand mit temperaturunabhängigen Eigenschaften.

Vorzugsweise weist der Messwandler eine konstante Verlustleistung und eine charakteristische Erwärmungskurve auf. Der Messwandler ist vorzugsweise ein Shunt.

Der Auswerteeinheit liegt ein Teil der Erwärmungskurve des jeweiligen Messwandlers als Referenzwert vor, so dass sie durch einen Abgleich des ermittelten Erwärmungsverhaltens mit dem Referenzwert eine anstehende Überlast erkennen kann. Es erfolgt somit eine Auswertung des ermittelten Erwärmungsverhaltens. Bei dem Abgleich mit dem Referenzwert wird insbesondere das Erwärmungsverhalten des jeweiligen Messwandlers während eines definiertes Zeitintervalls betrachtet. Es werden somit die ermittelten Temperaturen des jeweiligen Messwandlers während eines definiertes Zeitintervall analysiert. Sind die Messwandler und die zugehörigen Temperaturfühler der Temperaturmesseinheit gleich ausgebildet, so kann der Referenzwert für die Messwandler gleich ausgebildet sein.

In einer weiteren vorteilhaften Ausführungsform der Erfindung ist die Vorrichtung ein Schaltgerät, insbesondere ein Überlastrelais oder ein Leistungsschalter (z.B. Motorschutzschalter, Anlagenschutzschalter).

Die Vorrichtung ist insbesondere dezentral vom Verbraucher angeordnet, d.h. sie ist kein Bestandteil des Verbrauchers (z.B. Elektromotor).

Im Folgenden werden die Erfindung und Ausgestaltungen der Erfindung anhand der in den Figuren dargestellten Ausführungsbeispiele näher beschrieben und erläutert. Es zeigen:
- FIG 1: eine schematische Darstellung einer ersten Strombahn, welcher eine Überwachungseinrichtung aufweist und
- FIG 2: eine schematische Darstellung eines Vorrichtung zum Schutz eines elektrischen Verbrauchers.

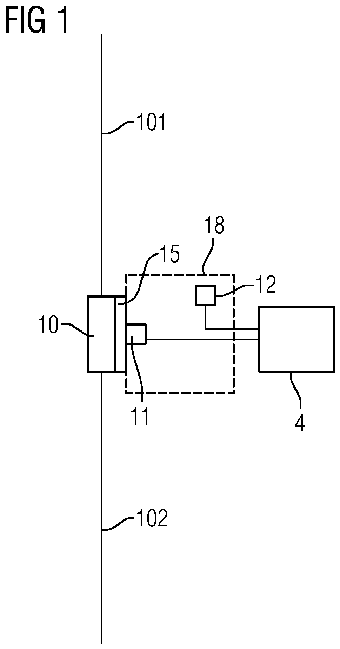

FIG 1 zeigt eine schematische Darstellung einer ersten Strombahn, welche eine Überwachungseinrichtung aufweist. Die abgebildete Strombahn ist Bestandteil einer Vorrichtung zum Schutz eines nachgeschalteten Verbrauchers. Mittels der Überwachungseinrichtung kann eine anstehende Überlast des Verbrauchers ermittelt werden. Hierfür wird die Vorrichtung in den Strompfad des Verbrauchers integriert. Ist beispielsweise der Verbraucher ein dreiphasiger Drehstrommotor so weist mindestens eine Zuleitung (Phase) des Drehstrommotors die abgebildete Strombahn und Überwachungseinrichtung auf.

Die erste Strombahn umfasst eine erste Leitung 101 und eine zweite Leitung 102. Die Überwachungseinrichtung umfasst eine erste Temperaturmesseinheit 18, eine Auswerteeinheit 4 und einen ersten Messwandler 10. Die erste Temperaturmesseinheit 18 umfasst einen ersten Temperaturfühler 11 und einen zweiten Temperaturfühler 12, wobei mit dem ersten Temperaturfühler 11 die Temperatur des ersten Messwandlers 10 erfasst werden kann und mit dem zweiten Temperaturfühler 12 eine Referenztemperatur erfasst werden kann. Der zweite Temperaturfühler 12 ist derart platziert, dass in Bezug zum ersten Temperaturfühler 11 ein anderer Messpunkt (andere Temperaturmessstelle) erfasst wird, so dass eine strombedingte Erwärmung des ersten Messwandlers 10 ermittelt werden kann. Der erste und zweite Temperaturfühler 11,12 ist jeweils ein Halbleiter, insbesondere eine Diode, so dass über eine Messung deren Spannung ein Rückschluss auf die vorliegende Temperatur gewonnen werden kann.

Die ermittelten Temperaturen der ersten und zweiten Temperaturfühler 11,12 werden der Auswerteeinheit 4 bereitgestellt, so dass diese eine strombedingte Erwärmung des ersten Messwandlers 10 ermitteln kann. Die Ermittlung der strombedingten Erwärmung des ersten Messwandlers 10 und somit des strombedingten Erwärmungsverhaltens des ersten Messwandlers 10 erfolgt durch eine Analyse der erfassten Temperaturen der ersten und zweiten Temperaturfühler 11,12 über die Zeit. Mittels der Temperaturfühler 11,12 und der Auswerteeinheit 4 kann insbesondere eine Erwärmung des ersten Messwandlers 10 von ca. 10 Kelvin insbesondere im Beriech von -10°C bis 200°C ermittelt werden.

Der erste Messwandler 10 ist zwischen der ersten Leitung 101 und der zweiten Leitung 102 der ersten Strombahn angeordnet, so dass ein Strom von der ersten Leitung 101 über den ersten Messwandler 10 zur zweiten Leitung 102 fließen kann. Da über die erste Leitung 101 und zweite Leitung 102 die Energieversorgung des nachgeschalteten Verbrauchers erfolgt, fließt während des Betriebs des nachgeschalteten Verbrauchers der Strom über den ersten Messwandler 10. In Abhängigkeit des vorliegenden Betriebszustandes des nachgeschalteten Verbrauchers liegt eine Stromhöhe am ersten Messwandler 10 vor. In Abhängigkeit dieser Stromhöhe und der Stromflusszeit am ersten Messwandler 10 erfolgt eine definierte Erwärmung des ersten Messwandlers 10. Es liegt folglich ein charakteristisches Erwärmungsverhalten am ersten Messwandler 10 vor. Befindet sich der Verbraucher kurz vor einer thermischen Überlast, so liegt eine erhöhte Stromhöhe am ersten Messwandler 10 vor. Durch eine Auswertung des ermittelten Erwärmungsverhaltens des ersten Messwandlers 10 während eines definierten Zeitintervalls durch die Auswerteeinheit 4 kann somit ein Rückschluss auf den vorliegenden Zustand des nachgeschalteten Verbrauchers erfolgen. Im Nennbetrieb liegt üblicherweise eine Temperatur von ca. 60 bis 100°C am ersten Messwandler 10 vor. Kommt es jedoch zu einer Überlast am Verbraucher, so kann durch den erhöhten Stromfluss eine Temperatur am ersten Messwandler 10 von bis zu 700°C vorliegen.

Durch eine Überwachung der Temperatur des ersten Messwandlers 10 kann somit eine anstehende Überlast des Verbrauchers detektiert werden. Die Temperaturmesseinheit 18 umfasst hierfür die beiden Temperaturfühler 11,12. Der erste Temperaturfühler 11 ist maximal 2 mm von dem ersten Messwandler 10 beabstandet und kann dessen Temperatur erfassen. Zwischen dem ersten Temperaturfühler 11 und dem ersten Messwandler 10 ist eine Isolationsschicht 15 angeordnet, so dass eine galvanische Trennung beider Bauteile sichergestellt ist.

Der erste Temperaturfühler 11 erfasst die Temperatur des ersten Messwandlers 10, der zweite Temperaturfühler 12 erfasst zeitgleich eine Referenztemperatur innerhalb der Vorrichtung, so dass die Auswerteeinheit 4 anhand erfasster Temperaturen (Temperaturen des ersten Messwandlers 10 und Referenztemperaturen) ein strombedingtes Erwärmungsverhalten des ersten Messwandlers 10 ermitteln kann. Der erste und zweite Temperaturfühler 11,12 ist in diesem Ausführungsbeispiel räumlich getrennt (größer 0,05 mm) vom ersten Messwandler platziert. Ferner ist der zweite Temperaturfühler 12 mindestens 4 mm vom ersten Temperaturfühler 11 entfernt, so dass ein strombedingtes Erwärmungsverhalten des ersten Messwandlers 10 durch die Auswerteeinheit 4 berechnet werden kann. Es ist jedoch ebenso denkbar, dass der zweite Temperaturfühler 12 die Temperatur des ersten Messwandlers 10 in Bezug zum ersten Temperaturfühler 11 an einem anderen Messpunkt des ersten Messwandlers 10 erfasst, so dass ein Erwärmungsverhalten des ersten Messwandlers 10 ermittelbar ist.

Der erste Messwandler 10 ist ein metallischer elektrischer Widerstand (Shunt), welcher eine charakteristische Erwärmungskurve aufweist. Der Auswerteeinheit 4 liegt das charakteristische Erwärmungsverhalten des ersten Messwandlers 10 als Referenzwert vor, so dass sie anhand eines Vergleichs des ermittelten vorliegenden Erwärmungsverhaltens des ersten Messwandlers 10, insbesondere während eines definierten Zeitintervalls, mit dem Referenzwert einen Rückschluss auf den vorliegenden Auslastungszustand des Verbrauchers gewonnen werden kann. Die Auswerteeinheit 4 kann folglich fortlaufend einen die Stromhöhe und Stromflusszeit charakterisierenden Wert des ersten Messwandlers 10 überwachen, so dass anhand des vorliegenden Erwärmungsverhaltens des ersten Messwandlers 10 und somit anhand dessen thermischen Zustandes ein Motor bzw. Leitungsschutz abgeleitet werden kann. Es kann somit ermitteln werden, ob eine Überlast am nachgeschalteten Verbraucher ansteht oder nicht.

In der FIG 1 wird lediglich eine Phase durch die Überwachungseinrichtung überwacht. Es ist jedoch ebenso denkbar, dass bei mehrphasigen Verbrauchern jede Phase oder zumindest zwei Phasen jeweils eine Temperaturmesseinheit umfasst/-en.

Die Temperaturfühler 11,12 können die Temperatur mit einer hohen Auflösung, beispielsweise kleiner 1 Kelvin, messen. Auf diese Weise kann mit geringen Temperaturunterschieden und somit mit geringen elektrischen Widerstandswerten des erstens Messwandlers 10 gearbeitet werden. Hierdurch kann der Messbereich hinsichtlich der Stromuntergrenze erheblich nach unten vergrößert werden, so dass der Einstellbereich beispielsweise gegenüber der Bimetalllösung erheblich erweitert werden kann. Ein typischer Wert für die notwendige Temperatur bei Bimetalllösungen ist beispielsweise 50 Kelvin Übertemperatur. Währenddessen bei einer Lösung mittels eines ersten Messwandlers 10 Erwärmungen von unter 10 Kelvin ausreichen. Hiermit lassen sich Einstellbereich größer 1 zu 4 realisieren.

Die Auswertung des strombedingten Erwärmungsverhaltens des ersten Messwandlers 10 über dessen Temperatur ist weitgehend frequenzunabhängig und somit für AC- und DC-Anwendungen tauglich.

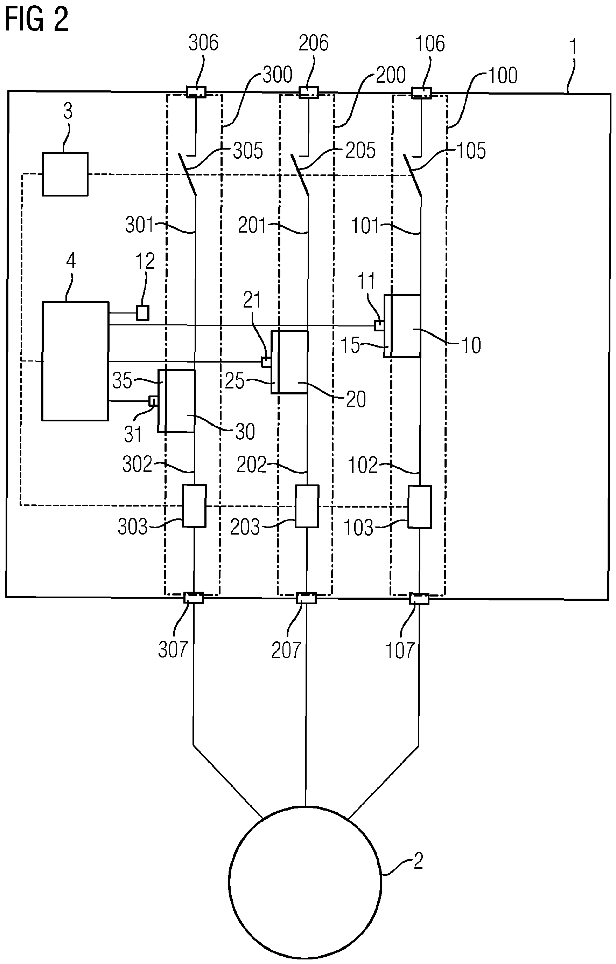

FIG 2 zeigt eine schematische Darstellung einer Vorrichtung 1 zum Schutz eines elektrischen Verbrauchers 2. Die Vorrichtung 1 ist in diesem Ausführungsbeispiel ein Leistungsschalter 1, mit welchem ein Verbraucher 2, nämlich ein dreiphasiger elektrischer Motor, überwacht werden kann. Der Leistungsschalter 1 ist hierfür in den Versorgungsstrang des Verbrauchers 2 zwischengeschaltet, so dass mittels des Leistungsschalters 1 die drei Phasen des Verbrauchers 2 überwacht werden können.

Damit der Leistungsschalter 1 in den Versorgungsstrang des elektrischen Verbrauchers 2 integriert werden kann, weist er eingangsseitige Anschlussvorrichtungen 106,206,306 und ausgangsseitige Anschlussvorrichtungen 107,207,307 auf. In dem Leistungsschalter 1 werden somit die einzelnen Phasen des Verbrauchers 2 galvanisch getrennt geführt. Über die erste Strombahn 100 wird die erste Phase abgebildet, über die zweite Strombahn 200 wird die zweite Phase abgebildet und über die dritte Strombahn 300 wird die dritte Phase des Verbrauchers 2 abgebildet. Über ein Schaltelement 105 der ersten Strombahn 100 kann für die erste Phase der Energiefluss zum Verbraucher 2 unterbrochen werden. Über ein Schaltelement 205 der zweiten Strombahn 200 kann der Energiefluss für die zweite Phase zum Verbraucher 2 unterbrochen werden. Über ein Schaltelement 305 der dritten Strombahn 300 kann für die dritte Phase der Energiefluss zum Verbraucher 2 unterbrochen werden. Die Ansteuerung der Schaltelemente 105,205,305 erfolgt über ein Schaltschloss 3.

Das Schaltschloss 3 ist mit der Auswerteeinheit 4 sowie mit dem Kurzschlussauslöser 103 der ersten Strombahn 100, dem Kurzschlussauslöser 203 der zweiten Strombahn 200 und dem Kurzschlussauslöser 303 der dritten Strombahn 300 verbunden.

Mittels der Kurzschlussauslöser 103,203,303 der jeweiligen Strombahnen 100,200,300 kann ein auftretender Kurzschluss in den einzelnen Strombahnen und somit in den einzelnen Phasen des Verbrauchers 2 detektiert werden, so dass bei einer Detektion eines Kurzschlusses die Energiezufuhr zum Verbraucher 2 unterbunden werden kann. Hierfür wird von den Kurzschlussauslösern 103,203,303 ein entsprechendes Signal an das Schaltschloss 3 ausgegeben, so dass dieses die Schaltelemente 105,205,305 öffnen kann.

Ferner weist der Leistungsschalter eine Überwachungsvorrichtung auf, mit welcher eine anstehende Überlast des elektrischen Verbrauchers 2 detektiert werden kann. Die erste Strombahn 100 umfasst hierfür, wie bereits in FIG 1 gezeigt, eine erste Leitung 101 und eine zweite Leitung 102. Zwischen der ersten Leitung 101 und der zweiten Leitung 102 ist ein erster Messwandler 10 angeordnet, welches eine elektrische Verbindung zwischen den beiden Leitungen 101 und 102 herstellen. Der erste Messwandler 10 ist insbesondere ein metallischer, elektrischer Widerstand mit temperaturunabhängigen Eigenschaften. In Abhängigkeit der vorliegenden Stromhöhe und Stromflusszeit in der ersten Strombahn 100 liegt eine definierte Erwärmung des ersten Messwandlers 10 vor.

Die Temperatur des ersten Messwandlers 10 kann mittels eines ersten Temperaturfühlers 11 einer ersten Temperaturmesseinheit erfasst werden. Die erfasste Temperatur am ersten Temperaturfühler 11 der ersten Temperaturmesseinheit wird der Auswerteeinheit 4 bereitgestellt. Eine isolierende Schicht 15 zwischen dem ersten Messwandler 10 und dem ersten Temperaturfühler 11 der ersten Temperaturmesseinheit stellt eine galvanische Trennung zwischen dem ersten Temperaturfühler 11 und dem ersten Messwandler 10 her. Die erste Temperaturmesseinheit umfasst ferner einen zweiten Temperaturfühler 12, welcher eine Referenztemperatur innerhalb des Leistungsschalters 1 misst. Dessen erfasste Temperatur wird der Auswerteeinheit 4 ebenso zur Verfügung gestellt. Der erste Temperaturfühler 11 erfasst die Temperatur an einem anderen Messpunkt als der zweite Temperaturfühler 12, so dass im aktiven Betrieb des Verbrauchers 2 eine strombedingte Erwärmung des ersten Messwandlers durch zeitgleiche Erfassungen der Temperaturen des ersten und zweiten Temperaturfühlers 11,12 ermittelt werden kann. Durch einen Vergleich der Temperaturen des ersten Temperaturfühlers 11 und des zweiten Temperaturfühlers 12 der ersten Temperaturmesseinheit kann die Auswerteeinheit folglich ein charakteristisches Erwärmungsverhalten am ersten Messwandler 10 ermitteln und anschließend auswerten.

Die Energieversorgung der zweiten Phase des Verbrauchers 2 wird über die zweite Strombahn 200 geführt. Die zweite Strombahn 200 weist ebenso eine erste Leitung 201 und eine zweite Leitung 202 auf. Zwischen der ersten und zweiten Leitung 201 und 202 ist ein zweiter Messwandler 20 angeordnet, welches eine elektrische Verbindung zwischen der ersten Leitung 201 und der zweiten Leitung 202 sicherstellt. Der zweite Messwandler 20 ist ebenso wie der erste Messwandler 10 der ersten Strombahn 100 ein definierter Widerstand, welcher in Abhängigkeit des vorliegenden Stromflusses und der vorliegenden Stromflusszeit einen charakteristischen thermischen Zustand einnimmt. Die Temperatur des zweiten Messwandlers 20 kann mittels eines dritten Temperaturfühlers 21 einer zweiten Temperaturmesseinheit ermittelt werden. Der dritte Temperaturfühler 21 ist mittels einer Isolationsschicht 25 galvanisch von dem zweiten Messwandler 20 getrennt. Durch einen Abgleich der erfassten Temperaturen des zweiten Temperaturfühlers 12 mit den erfassten Temperaturen des dritten Temperaturfühlers 21 kann die Auswerteeinheit 4 die vorliegende Erwärmung am zweiten Messwandler 20 ermitteln. Es kann somit das Erwärmungsverhalten am zweiten Messwandler 20 analysiert werden. Die Energieversorgung der dritten Phase des Verbrauchers 2 wird über die dritte Strombahn 300 geführt, so dass ebenso die dritte Phase auf Überlast überwacht werden kann. Die dritte Strombahn 300 weist eine erste Leitung 301 und eine zweite Leitung 302 auf. Zwischen der ersten und zweiten Leitung 301,302 ist ein dritter Messwandler 30 angeordnet, welches die erste und zweite Leitung 301,302 elektrisch leitend verbindet. Ein über die dritte Strombahn 300 fließender Strom fließt folglich über den dritten Messwandler 30. In Abhängigkeit der Stromhöhe und der Stromflusszeit an der dritten Phase liegt eine charakteristische strombedingte Erwärmung am dritten Messwandler 30 vor. Zur Ermittlung der strombedingten Erwärmung wird die Temperatur des dritten Messwandlers 30 erfasst. Die Temperatur des dritten Messwandlers 30 kann mittels eines vierten Temperaturfühlers 31 einer dritten Temperaturmesseinheit ermittelt werden und der Auswerteeinheit 4 bereitgestellt werden. Zwischen dem vierten Temperaturfühler 31 und dem dritten Messwandlers 30 ist eine isolierende Schicht 35 angeordnet, so dass eine galvanische Trennung des vierten Temperaturfühlers 31 von dem dritten Messwandler 30 erfolgt.

Die einzelnen Strombahnen 100,200,300 weisen folglich jeweils Messwandler 10,20,30 auf, welche in Abhängigkeit der anliegenden Stromhöhe und der Stromflusszeit eine charakteristische strombedingte Erwärmung vollziehen. Anhand einer Überwachung der Temperatur der jeweiligen Messwandler 10,20,30 über die Zeit kann das zeitliche Erwärmungsverhalten der jeweiligen Messwandler 10,20,30 analysiert werden. Durch den zusätzlichen Abgleich mit der Referenztemperatur des zweiten Temperaturfühlers 12 kann die Analyse der ermittelten Temperaturen der Messwandler 10,20,30 auf die strombedingte Erwärmung der Messwandler 10,20,30 reduziert werden.

Es ist ebenso denkbar, dass anstelle der Ermittlung des Erwärmungsverhaltens der jeweiligen Messwandler 10,20,30 mittels eines Abgleichs deren Temperatur mit der erfassten Referenztemperatur des zweiten Temperaturfühlers 12 eine Ermittlung des Erwärmungsverhaltens der jeweiligen Messwandler 10,20,30 ohne der Referenztemperatur durch den zweiten Temperaturfühler durch eine Analyse der erfassten Temperaturen der ersten, dritten und/oder vierten Temperaturfühler 11,21,31 über die Zeit erfolgt. Hierbei können jedoch Erwärmungen der Messwandler 10,20,30, welche nicht durch den Stromfluss durch die Messwandler 10,20,30 bedingt sind (z.B. Umgebungstemperatur) nicht ausgeschlossen werden.

Mittels der ermittelten strombedingten Erwärmung der Messwandler 10,20,30 kann folglich ein Rückschluss auf den vorliegenden Stromfluss in der entsprechenden Strombahn und somit ein Rückschluss auf den vorliegenden Betriebszustand des Verbrauchers 2 gewonnen werden, da bei einer anstehenden Überlast ein erhöhter Stromfluss in einzelnen Phasen des Verbrauchers vorliegt.

Der Auswerteeinheit 4 ist die Erwärmungscharakteristik des ersten, zweiten und dritten Messwandlers 10,20,30 bekannt und als Referenzwert hinterlegt. Die Auswerteeinheit 4 kann folglich durch eine Vergleich des strombedingten Erwärmungsverhaltens der einzelnen Messwandler 10,20,30, insbesondere während eines definierten Zeitintervalls, mit dem Referenzwert eine anstehende Überlast des elektrischen Verbrauchers 2 ermittelt und entsprechende Gegenmaßnahmen einleiten. Das Zeitintervall in welchem die Analyse des Erwärmungsverhaltens des jeweiligen Messwandlers 10,20,30 erfolgt, wird vorzugsweise in Abhängigkeit der vorliegenden Temperatur des jeweiligen Messwandlers 10,20,30 gewählt. Bei einer ermittelten anstehenden Überlast des Verbrauchers 2 gibt die Auswerteeinheit 4 ein Warnsignal an das Schaltschloss 3 aus, so dass die Schaltelemente 105,205 305 geöffnet werden und somit der Energiefluss zum Verbraucher unterbunden wird. Auf diese Weise kann eine thermische Beschädigung des Verbrauchers 2 durch eine Überlast vermieden werden.

Dadurch, dass eine thermische Überlast des Verbrauchers 2 durch eine Auswertung des Erwärmungsverhaltens des Messwandlers 10,20,30 ermittelt wird, liegt ebenso ein thermisches Gedächtnis durch den Messwandler 10,20,30 vor, so dass es kurz nach einer thermischen Überlast nicht versehentlich zu einem Zuschalten des Verbrauchers kommen kann. Erst nachdem der Messwandler 10,20,30 eine definierte Abkühlung erfahren hat, kann der Verbraucher 2 erneut an das Versorgungsnetz geschaltet werden, so dass dieser wieder mit Strom versorgt wird. Die Ermittlung der notwendigen Abkühlung des Verbrauchers durch eine Analyse der Temperaturen des Messwandlers 10,20,30 erfolgt ebenso durch die Auswerteeinheit 4. Hierfür liegend der Auswerteeinheit 4 ebenso Referenzwerte vor.

Die Vorrichtung 1 zur Überwachung einer thermischen Überlast eines Verbrauchers 2 wurde in FIG 2 beispielhaft anhand eines Leistungsschalters 1 beschrieben. Ebenso kann die Vorrichtung 1 z.B. ein Überlastrelais sein. In diesem Fall wären die Kurzschlussauslöser 103,203 und 303 sowie gegebenenfalls das Schaltschloss 3 und dessen anzusteuernde Schaltelemente 105,205,305 nicht vorhanden.

Die Temperaturfühler 11,12,21,31 sind jeweils Halbleiter, insbesondere Dioden, so dass mittels einer Analyse deren Spannung die Temperatur am Temperaturfühler und somit ermittelt werden kann. Zur Steigerung der Messgenauigkeit können ebenso mehrere Temperaturfühler an den Messwandlern 10,20,30 platziert werden. Ebenso ist es denkbar, dass der zweite Temperaturfühler 12 außerhalb der Vorrichtung 1 platziert ist.

Als Verbraucher 2 kann ebenso eine Leitung gesehen werden, bei welcher ein Schutz vor einer thermischen Überlast sichergestellt werden muss.

Ein großer Vorteil der Vorrichtung 1 und insbesondere der Überwachungseinrichtung besteht darin, dass die galvanische Trennung zwischen den einzelnen Phasen (Strombahnen 100,200, 300) sowie der jeweiligen Temperaturfühler 11,21,31 zu den Strombahnen 100,200,300 leicht zu realisieren ist.

## Patentansprüche

1. Vorrichtung (1) zum Schutz eines Verbrauchers (2) mit einer ersten Strombahn (100), welche zwei Leitungen (101,102) umfasst, und einer Überwachungseinrichtung, zur Ermittlung einer anstehenden Überlast des elektrischen Verbrauchers (2), wobei die Überwachungseinrichtung eine erste Temperaturmesseinheit (18), eine Auswerteeinheit (4) und einen ersten Messwandler (10), welcher eine elektrisch leitende Verbindung zwischen den zwei Leitungen (101,102) der ersten Strombahn (100) herstellt, umfasst, wobei die erste Temperaturmesseinheit (18) von dem ersten Messwandler (10) galvanisch getrennt ist,
**dadurch gekennzeichnet , dass** der Messwandler (10) eine charakteristische Erwärmungskurve aufweist, und
die erste Temperaturmesseinheit (18) mindestens zweimal Temperaturen des ersten Messwandlers (10) erfassen kann, wobei die Auswerteeinheit (4) mittels der erfassten Temperaturen des ersten Messwandlers (10) ein zeitliches Erwärmungsverhalten des ersten Messwandlers (10) ermitteln kann und durch eine Auswertung des ermittelten zeitlichen Erwärmungsverhaltens des ersten Messwandlers (10) eine anstehende Überlast am Verbraucher (2) ermitteln kann.

2. Vorrichtung (1) nach Anspruch 1, wobei die Auswerteeinheit (4) anhand eines Vergleichs des ermittelten Erwärmungsverhaltens des ersten Messwandlers (10) mit einem in der Auswerteeinheit (4) hinterlegten Referenzwert eine anstehende Überlast am Verbraucher (2) ermitteln kann.

3. Vorrichtung (1) nach einem der vorhergehenden Ansprüche, wobei die Auswerteeinheit (4) bei einer ermittelten anstehenden Überlast am Verbraucher (2) ein Warnsignal, insbesondere ein elektrisches Warnsignal, ausgeben kann.

4. Vorrichtung (1) nach einem der vorhergehenden Ansprüche, wobei die erste Temperaturmesseinheit (18) einen ersten und zweiten Temperaturfühler (11,12) umfasst, wobei der erste Temperaturfühler (11) die Temperatur des ersten Messwandlers (10) und der zweite Temperaturfühler (12) eine Referenztemperatur erfassen kann, wobei die Auswerteeinheit (4) das Erwärmungsverhalten des ersten Messwandlers (10) mittels erfasster Temperaturen des ersten Messwandlers (10) und Referenztemperaturen ermitteln und auswerten kann.

5. Vorrichtung (1) nach Anspruch 4, wobei der erste Temperaturfühler (11) maximal 2 mm von dem ersten Messwandler (10) beabstandet ist.

6. Vorrichtung (1) nach einem der Ansprüche 4 bis 5, wobei zwischen dem ersten Temperaturfühler (11) und dem ersten Messwandler (10) eine Isolationsschicht (15) angeordnet ist.

7. Vorrichtung (1) nach einem der vorhergehenden Ansprüche, wobei die Überwachungseinrichtung derart ausgebildet ist, dass zur zeitlichen Ermittlung des Erwärmungsverhaltens des ersten Messwandlers (10) mindestens zweimal die Temperatur des ersten Messwandlers (10) erfasst wird.

8. Vorrichtung (1) nach einem der vorhergehenden Ansprüche, wobei die Überwachungseinrichtung derart ausgebildet ist, dass zur zeitlichen Ermittlung des Erwärmungsverhaltens des ersten Messwandlers (10) die Temperatur des ersten Messwandlers (10) wiederholt in einem fest definierten Zeitintervall erfasst wird.

9. Vorrichtung (1) nach einem der vorhergehenden Ansprüche, mit einer zweiten Strombahn (200), welche zwei Leitungen (201,202) umfasst, wobei die Überwachungseinrichtung ferner eine zweite Temperaturmesseinheit und einen zweiten Messwandler (20), welcher eine elektrisch leitende Verbindung zwischen den zwei Leitungen (201,202) der zweiten Strombahn (200) herstellt, umfasst, wobei die zweite Temperaturmesseinheit von dem zweiten Messwandler (20) galvanisch getrennt ist und die Temperatur des zweiten Messwandlers (20) erfassen kann, so dass die Auswerteeinheit (4) mittels der erfassten Temperatur des zweiten Messwandlers (20) eine anstehende Überlast am Verbraucher (2) ermitteln kann.

10. Vorrichtung (1) nach einem der vorhergehenden Ansprüche, mit einer dritten Strombahn (300), welche zwei Leitungen (301,302) umfasst, wobei die Überwachungseinrichtung ferner eine dritte Temperaturmesseinheit und einen dritten Messwandler (30), welcher eine elektrisch leitende Verbindung zwischen den beiden Leitungen (301,302) der dritten Strombahn (300) herstellt, umfasst, wobei die dritte Temperaturmesseinheit von dem dritten Messwandler (30) galvanisch getrennt ist und die Temperatur des dritten Messwandlers (30) erfassen kann, so dass die Auswerteeinheit (4) mittels der erfassten Temperatur des dritten Messwandlers (30) eine anstehende Überlast am Verbraucher (2) ermitteln kann.

11. Vorrichtung (1) nach einem der vorhergehenden Ansprüche, wobei der erste Messwandler (10) und sofern vorhanden zweite und/oder dritte Messwandler (20,30) jeweils ein Widerstand ist.

12. Vorrichtung (1) nach einem der vorhergehenden Ansprüche, wobei die Vorrichtung (1) ein Schaltgerät, insbesondere ein Überlastrelais oder ein Leistungsschalter, ist.

13. Vorrichtung (1) nach einem der vorhergehenden Ansprüche, wobei die erste Strombahn (100) ein Schaltelement (105) umfasst, mittels welchem der Energiefluss zum Verbraucher (2) unterbrochen werden kann.

14. Vorrichtung (1) nach einem der vorhergehenden Ansprüche, wobei die erste Strombahn (100) eine eingangsseitige Anschlussvorrichtung (106) und eine ausgangsseitige Anschlussvorrichtung (107) aufweist.

15. Verfahren zum Schutz eines Verbrauchers (2), wobei eine Vorrichtung (1) eine erste Strombahn (100), welche zwei Leitungen (101,102) umfasst, und eine Überwachungseinrichtung, zur Ermittlung einer anstehenden Überlast des Verbrauchers (2), umfasst, wobei die Überwachungseinrichtung eine erste Temperaturmesseinheit (18), eine Auswerteeinheit (4) und einen ersten Messwandler (10), welches eine elektrisch leitende Verbindung zwischen den zwei Leitungen (101,102) der ersten Strombahn (100) herstellt, umfasst, wobei die erste Temperaturmesseinheit (18) von dem ersten Messwandler (10) galvanisch getrennt ist,
**dadurch gekennzeichnet, dass** die erste Temperaturmesseinheit (18) mindestens zweimal eine Temperatur des ersten Messwandlers (10) erfasst, der eine charakteristische Erwärmungskurve aufweist, und die Auswerteeinheit (4) mittels der erfassten Temperaturen des ersten Messwandlers (10) ein zeitliches Erwärmungsverhalten des ersten Messwandlers (10) ermittelt und durch eine Auswertung des ermittelten zeitlichen Erwärmungsverhaltens des ersten Messwandlers (10) eine anstehende Überlast am Verbraucher (2) ermitteln kann.

## Claims

1. Device (1) for protecting a load (2) with a first current path (100) having two lines (101, 102), and a monitoring arrangement for detecting an imminent overload on the electrical load (2), wherein the monitoring arrangement comprises a first temperature measuring unit (18), an evaluation unit (4) and a first transducer (10) which establishes an electrically conductive connection between the two lines (101, 102) of the first current path (100), wherein the first temperature measuring unit (18) is electrically isolated from the first transducer (10),
**characterised in that** the transducer (10) has a characteristic heating curve, and
the first temperature measuring unit (18) can record at least two temperatures of the first transducer (10), wherein the evaluation unit (4) can determine, using recorded temperatures of the first transducer (10), a heating behaviour of the first transducer (10) over time and can detect, by evaluating the determined heating behaviour of the first transducer (10) over time, an imminent overload on the load (2).

2. Device (1) according to claim 1, wherein the evaluation unit (4) can detect an imminent overload on the load (2) based on a comparison of the determined heating behaviour of the first transducer (10) with a reference value stored in the evaluation unit (4).

3. Device (1) according to one of the preceding claims, wherein on detection of an imminent overload on the load (2), the evaluation unit (4) can output a warning signal, in particular an electrical warning signal.

4. Device (1) according to one of the preceding claims, wherein the first temperature measuring unit (18) comprises a first and second temperature sensor (11, 12), wherein the first temperature sensor (11) can record the temperature of the first transducer (10) and the second temperature sensor (12) can record a reference temperature, wherein the evaluation unit (4) can determine and evaluate the heating behaviour of the first transducer (10) by means of recorded temperatures of the first transducer (10) and reference temperatures.

5. Device (1) according to claim 4, wherein the first temperature sensor (11) is spaced a maximum of 2 mm apart from the first transducer (10).

6. Device (1) according to one of the claims 4 or 5, wherein an insulating layer (15) is arranged between the first temperature sensor (11) and the first transducer (10).

7. Device (1) according to one of the preceding claims, wherein the monitoring arrangement is configured such that for determination of the heating behaviour of the first transducer (10) over time, the temperature of the first transducer (10) is recorded at least twice.

8. Device (1) according to one of the preceding claims, wherein the monitoring arrangement is configured such that for determination of the heating behaviour of the first transducer (10) over time, the temperature of the first transducer (10) is repeatedly recorded at a fixed defined time interval.

9. Device (1) according to one of the preceding claims, having a second current path (200) which comprises two lines (201, 202), wherein the monitoring arrangement also comprises a second temperature measuring unit and a second transducer (20) which creates an electrically conductive connection between the two lines (201, 202) of the second current path (200), wherein the second temperature measuring unit is electrically isolated from the second transducer (20) and can record the temperature of the second transducer (20) so that the evaluation unit (4) can detect an imminent overload on the load (2) by means of the recorded temperature of the second transducer (20).

10. Device (1) according to one of the preceding claims, having a third current path (300) which comprises two lines (301, 302), wherein the monitoring arrangement also comprises a third temperature measuring unit and a third transducer (30) which creates an electrically conductive connection between the two lines (301, 302) of the third current path (300), wherein the third temperature measuring unit is electrically isolated from the third transducer (30) and can record the temperature of the third transducer (30) so that the evaluation unit (4) can detect an imminent overload on the load (2) by means of the recorded temperature of the third transducer (30).

11. Device (1) according to one of the preceding claims, wherein the first transducer (10) and, where present, the second and/or third transducer (20, 30) are each a resistor.

12. Device (1) according to one of the preceding claims, wherein the device (1) is a switching device, in particular an overload relay or a circuit breaker.

13. Device (1) according to one of the preceding claims, wherein the first current path (100) comprises a switching element (105) by means of which the energy flow to the load (2) can be interrupted.

14. Device (1) according to one of the preceding claims, wherein the first current path (100) comprises an input-side connection device (106) and an output-side connection device (107).

15. Method for protecting a load (2), wherein a device (1) has a first current path (100) comprising two lines (101, 102), and a monitoring arrangement for detecting an imminent overload on the load (2), wherein the monitoring arrangement comprises a first temperature measuring unit (18), an evaluation unit (4) and a first transducer (10) which establishes an electrically conductive connection between the two lines (101, 102) of the first current path (100), wherein the first temperature measuring unit (18) is electrically isolated from the first transducer (10),
**characterised in that**
the first temperature measuring unit (18) records a temperature of the first transducer (10) which has a characteristic heating curve at least twice and the evaluation unit (4) determines, using the recorded temperatures of the first transducer (10), a heating behaviour of the first transducer (10) over time and can detect, by evaluating the determined heating behaviour of the first transducer (10) over time, an imminent overload on the load (2).

## Revendications

1. Installation ( 1 ) de protection d'un consommateur ( 2 ) ayant une première voie ( 100 ) de courant, qui comprend deux conducteurs ( 101, 102 ), et un dispositif de contrôle pour la détermination d'une surcharge imminente du consommateur ( 2 ) électrique, le dispositif de contrôle comprenant une première unité ( 18 ) de mesure de la température, une unité ( 4 ) d'exploitation et un premier transducteur ( 10 ) de mesure, qui ménage une liaison conductrice de l'électricité entre les deux conducteurs ( 101, 102 ) de la première voie ( 100 ) de courant, la première unité ( 18 ) de mesure de la température étant séparée galvaniquement du premier transducteur ( 10 ) de mesure,
**caractérisée en ce que** le transducteur ( 10 ) de mesure a une courbe d'échauffement caractéristique et
la première unité ( 18 ) de mesure de la température peut détecter au moins deux fois des températures du premier transducteur ( 10 ) de mesure, l'unité ( 4 ) d'exploitation pouvant déterminer au moyen des températures détectées du premier transducteur ( 10 ) de mesure, un comportement d'échauffement dans le temps du premier transducteur ( 10 ) de mesure et pouvant, par une exploitation du comportement d'échauffement dans le temps qui a été déterminé du premier transducteur ( 10 ) de mesure, déterminer une surcharge imminente du consommateur ( 2 ).

2. Installation ( 1 ) suivant revendication 1, dans laquelle l'unité ( 4 ) d'exploitation peut, à l'aide d'une comparaison du comportement d'échauffement déterminé du premier transducteur ( 10 )de mesure à une valeur de référence mémorisée dans l'unité ( 4 ) d'exploitation, déterminer une surcharge imminente du consommateur ( 2 ).

3. Installation ( 1 ) suivant l'une des revendications précédentes, dans laquelle l'unité ( 4 ) d'exploitation peut, si une surcharge imminente du consommateur ( 2 ) est déterminée, émettre un signal d'alerte, notamment un signal d'alerte électrique.

4. Installation ( 1 ) suivant l'une des revendications précédentes, dans laquelle la première unité ( 18 ) de mesure de la température comprend une première et une deuxième sondes ( 11,12 ) de température, la première sonde ( 11 ) de température pouvant détecter la température du premier transducteur ( 10 ) de mesure et la deuxième sonde ( 12 ) de température une température de référence, l'unité ( 4 ) d'exploitation pouvant déterminer le comportement d'échauffement du premier transducteur ( 10 ) de mesure au moyen des températures détectées du premier transducteur ( 10 ) de mesure et des températures de référence et pouvant l'exploiter.

5. Installation ( 1 ) suivant la revendication 4, dans laquelle la première sonde ( 11 ) de température est à une distance au maximum de 2 mm du premier transducteur ( 10 ) de mesure.

6. Installation ( 1 ) suivant l'une des revendications 4 à 5, dans laquelle une couche ( 15 ) isolante est disposée entre la première sonde ( 11 ) de température et le premier transducteur ( 10 ) de mesure.

7. Installation ( 1 ) suivant l'une des revendications précédentes, dans laquelle le dispositif de contrôle est constitué de manière à ce que, pour la détermination en fonction du temps du comportement d'échauffement du premier transducteur ( 10 ) de mesure, la température du premier transducteur ( 10 ) de mesure soit détectée au moins deux fois.

8. Installation ( 1 ) suivant l'une des revendications précédentes, dans laquelle le dispositif de contrôle est constitué de manière à détecter, pour la détermination en fonction du temps du comportement d'échauffement du première transducteur ( 10 ) de mesure, la température du premier transducteur ( 10 ) de mesure de manière répétée dans un intervalle de temps défini de manière fixe.

9. Installation ( 1 ) suivant l'une des revendications précédentes, ayant une deuxième voie ( 200 ) de courant, qui comprend deux conducteurs ( 201, 202 ), le dispositif de contrôle comprenant en outre une deuxième unité de mesure de la température et un deuxième transducteur ( 20 ) de mesure, qui ménage une liaison conductrice de l'électricité entre les deux conducteurs ( 201, 202 ) de la deuxième voie ( 200 ) de courant, la deuxième unité de mesure de la température étant séparée galvaniquement du deuxième transducteur ( 20 ) de mesure et pouvant détecter la température du deuxième transducteur ( 20 ) de mesure de manière à ce que l'unité ( 4 ) d'exploitation puisse déterminer au moyen de la température détectée du deuxième transducteur ( 20 ) de mesure une surcharge imminente du consommateur ( 2 ).

10. Installation ( 1 ) suivant l'une des revendications précédentes, ayant une troisième voie ( 300 ) de courant qui comprend deux conducteurs ( 301, 302 ), le dispositif de contrôle comprenant en outre une troisième unité de mesure de la température et un troisième transducteur ( 30 ) de mesure, qui ménage une liaison conductrice de l'électricité entre les deux conducteurs ( 301, 302 ) de la troisième voie ( 300 ) de courant, la troisième unité de mesure de la température étant séparée galvaniquement du troisième transducteur ( 30 ) de mesure et pouvant détecter la température du troisième transducteur ( 30 ) de mesure de manière à ce que l'unité ( 4 ) d'exploitation puisse, au moyen de la température détectée du troisième transducteur ( 30 ) de mesure, déterminer une surcharge imminente du consommateur ( 2 ).

11. Installation ( 1 ) suivant l'une des revendications précédentes, dans laquelle le premier transducteur ( 10 ) de mesure et, dans la mesure où ils sont présents, le deuxième/ou le troisième transducteur ( 20, 30 ) de mesure est respectivement une résistance.

12. Installation ( 1 ) suivant l'une des revendications précédentes, dans laquelle le dispositif ( 1 ) est un appareil de commutation, notamment un relai de surcharge ou un disjoncteur.

13. Installation ( 1 ) suivant l'une des revendications précédentes, dans laquelle la première voie ( 100 ) de courant comprend un élément ( 105 ) d'interruption, au moyen duquel le flux d'énergie allant au consommateur ( 2 ) peut être interrompu.

14. Installation ( 1 ) suivant l'une des revendications précédente, dans laquelle la première voie ( 100 ) de courant a un dispositif ( 106 ) de connexion du côté de l'entrée et un dispositif ( 107 ) de connexion du côté de la sortie.

15. Procédé de protection d'un consommateur ( 2 ) dans lequel une installation ( 1 ) comprend une première voie ( 100 ) de courant, qui comprend deux conducteurs ( 101, 102 ), et un dispositif de contrôle pour déterminer une surcharge imminente du consommateur( 2 ), le dispositif de contrôle comprenant une première unité ( 18 ) de mesure de la température, une unité ( 4 ) d'exploitation et un premier transducteur ( 10 ) de mesure qui ménage une liaison conductrice de l'électricité entre les deux conducteurs ( 101, 102 ) de la première voie ( 100 ) de courant, la première unité ( 18 ) de mesure de la température étant séparée galvaniquement du premier transducteur ( 10 ) de mesure,
**caractérisée en ce que** la première unité ( 18 ) de mesure de la température détecte au moins deux fois une température du premier transducteur ( 10 ) de mesure, qui a une courbe d'échauffement caractéristique, et l'unité ( 4 ) d'exploitation peut, à l'aide des températures détectées du premier transducteur ( 10 ) de mesure, déterminer un comportement d'échauffement en fonction du temps du premier transducteur ( 10 )de mesure, et par une exploitation du comportement d'échauffement en fonction du temps du premier transducteur ( 10 ) de mesure qui a été déterminé, déterminer une surcharge imminente du consommateur ( 2 ).
